# EUROPÄISCHE PATENTANMELDUNG

(11) **EP 0 639 539 A1**
(43) Veröffentlichungstag der Anmeldung: **22.02.1995**
(21) Anmeldenummer: 94112189.9
(22) Anmeldetag: 04.08.1994
(51) Int. Cl.: C04B 26/06, C08F 2/44, C08K 3/22, C08K 3/00, A47K 1/00, A47K 3/00

(54) **Verfahren zur Herstellung gegossener, hochgefüllter Polymethylmethacrylat-Formteile**

(30) Priorität: 17.08.1993 DE 4327610
(71) Anmelder: RÖHM GMBH, D-64293 Darmstadt (DE)
(72) Erfinder: Krieg, Manfred, Dr., D-64289 Darmstadt (DE); Ittmann, Günther, D-64823 Gross-Umstadt (DE)

(57) **Zusammenfassung**

Die Erfindung betrifft ein Verfahren zur Herstellung gefüllter Formteile auf Polymethylmethacrylatbasis mittels Substanzpolymerisation in einer geeigneten Polymerisationskammer, wobei man in an sich bekannter Weise eine flüssige, die Monomeren enthaltende Polymervorstufe PV herstellt, in die unter hochtourigem Rühren unter Bildung einer Suspension SP der partikelförmige Füllstoff FS in Anteilen von 30 bis 80 Gew.-% bezogen auf die gebildete Suspension SP eingetragen wird und wobei man der Suspension SP kurz vor dem Verfüllen in die Polymerisationskammer einen Radikal-Initiator und ein festes, teilchenförmiges Polymerisat PP in Anteilen von 1 bis 20 Gew.-% bezogen auf die Suspension SP in gleichmäßiger Verteilung zusetzt, anschließend in die Polymerisationskammer verfüllt, dann die Polymerisation durchführt und Entformung vornimmt.

## Beschreibung

### Gegenstand der Erfindung

Die Erfindung betrifft ein Verfahren zur Herstellung gegossener, hochgefüllter PMMA-Formteile.

### Stand der Technik

Traditionell werden mit den Methoden der Substanzpolymerisation transparente Polymethylmethacrylat-Platten, sogenannte "gegossene PMMA-Platten" hergestellt (vgl. H. Rauch-Puntigam, Th. Völker, Acryl- und Methacrylverbindungen, Springer-Verlag 1967, S. 275 - 292). Neben den transparenten "Acrylgläsern" haben mit Füllstoffen vorwiegend anorganischer Natur dotierte Acrylharze eine steigende Bedeutung erlangt, insbesondere auf dem Sanitärgebiet, im Küchenbereich, als Dekorplatten usw. Auch die Dotierung von Acrylglas mit Polymerpartikeln wird praktiziert. So werden in der DE-A 35 28 165 mit vernetzten Perlen eingetrübte Kunststoffelemente beschrieben. Die DE-A 42 16 341 empfiehlt lichtstreuende PMMA-Formkörper, die durch Zusatz von u.a. vernetzten, phenylgruppenhaltigen Teilchen gewonnen werden. Weiter wird ein Verfahren zur Herstellung von Acrylatkunststoffen mit farblich differenzierter Oberfläche unter Verwendung eingefärbter Polymerperlen in der DE-A 31 10 093 beschrieben. Ebenfalls wurden elektrisch leitende Kunststoffe beschrieben, deren Leitfähigkeit auf der Anwesenheit von oberflächlich mit leitfähigen Materialien versehenen Polymerpartikel beruht (DE-A 35 43 301). Im Prinzip erscheint die bei der Herstellung transparenter PMMA-Platten bewährte Technologie auf die Herstellung mit Füllermaterial dotierten, auch sogenannter "hochgefüllter" Platten übertragbar.
In der US-A 3 706 825 wird zum Beispiel ein Verfahren zur Herstellung von hochgefüllten Marmor-Imitaten im kontinuierlichen Betrieb unter Verwendung von Extrudern beschrieben.

### Aufgabe und Lösung

Probleme und Aufgaben, die allgemein bei der Herstellung gegossener, gefüllter Formteile zu lösen sind, seien im folgenden anhand der Herstellung gegossener, gefüllter Platten aufgezeigt.
So konnten die bei unmittelbarer Übertragung der Produktionsweise für gegossene PMMA-Platten erhaltenen, gefüllten PMMA-Platten bislang nicht befriedigen. Im Interesse eines beschleunigten Polymerisationsverlaufs verwendet die Technik häufig Redoxsysteme als Initiatoren (vgl. Rauch-Puntigam et al. loc.cit.). Bei der Anwendung dieser Methode zur Herstellung hochdotierter Platten stößt man mehrfach auf Probleme. So beobachtet man bei der Herstellung dicker Platten (z.B. Dicke 10 - 20 mm) mit großen Abmessungen, daß die Polymerisation bereits während des Verfüllens einsetzt, so daß an eine kontrollierte Polymerisation in den dafür üblichen Wagen nicht mehr zu denken ist. Darüber hinaus resultieren aus dem unkontrollierten Polymerisationsablauf Spannungen in den Platten und in der Folge Spannungsrißbildung.

Bei "langsamer" Polymerisation (als Anhalt seien 2 - 3 Stunden im Wasserbad genannt) erfolgt eine so starke Sedimentation der relativ grobteiligen Füllstoffpartikel, daß die fertigen Platten inhomogen anfallen und deutlich durchgebogen sind. Die Sedimentation kann auch durch Verwendung von polymerhaltigem Sirup nicht vollständig unterdrückt werden.
So bot sich zwar im Prinzip eine "langsame" Polymerisation an, dann mußten aber wiederum die Begleiterscheinungen, insbesondere die als unvermeidbar anzusehende Sedimentation mit dem Durchbiegen der Platten im Gefolge von diesem Vorgehen abbringen.
Es bestand daher die Aufgabe, ein Verfahren zur Herstellung gefüllter PMMA-Formteile zur Verfügung zu stellen, bei dem unter Beibehaltung der wesentlichen apparativen Voraussetzungen die geschilderten Defizite vermieden werden können.
Diese Aufgabe wird durch das erfindungsgemäße Verfahren in hervorragender Weise gelöst.
Die Erfindung betrifft somit ein Verfahren zur Herstellung gefüllter Formteile auf Polymethylmethacrylat-Basis mittels Substanzpolymerisation in einer geeigneten Polymerisationskammer, wobei man in an sich bekannter Weise eine flüssige, die Monomeren enthaltende Polymervorstufe PV herstellt, in die unter hochtourigem Rühren unter Bildung einer Suspension SP der partikelförmige anorganische Füllstoff FS in Anteilen von 30 - 80 Gew.-% bezogen auf die gebildete Suspension SP eingetragen wird und wobei man der zur Polymerisation vorbereiteten Suspension SP kurz vor dem Verfüllen in die Polymerisationskammer einen Radikal-Initiator bzw. ein Initiatorsystem, ein festes teilchenförmiges Polymerisat PP, vorzugsweise ebenfalls auf PMMA-Basis in Anteilen von 1 bis 20 Gew.-Teilen bezogen auf die Suspension SP in gleichmäßiger Verteilung zusetzt.
Die Monomeren der Vorstufe PV bestehen zu mindestens 50 und bis zu 100 Gew.-% aus Methylmethacrylat, daneben weiteren einschlägig als Comonomeren verwendeten Alkylestern oder Arylestern der (Meth)acrylsäure mit gewöhnlich 1 - 8 Kohlenstoffatomen, wie beispielsweise Ethyl(meth)acrylat, Propyl(meth)acrylat, Butyl(meth)acrylat bzw. Isomere, 2-Ethylhexyl(meth)acrylat, Cyclohexyl(meth)acrylat, Phenyl(meth)acrylat, Benzyl(meth)acrylat. Ferner können die Polymervorstufen noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat und -acrylat, Allylverbindungen wie Allylmethacrylat oder Triallylcyanurat genannt seien. Der Gehalt an vernetzenden Monomeren liegt im allgemeinen bei 0,1 bis 1,5 Gew.-% bezogen auf die Monomeren. Außer den Monomeren enthält die Polymervorstufe PV vorzugsweise ein Praepolymerisat PM in Anteilen von 1 bis 15 Gew.-% bezogen auf die Polymervorstufe PV.
Als Praepolymerisat PM kommen z.B. die einschlägig verwendeten PMMA-Polymerisate infrage, die gegebenenfalls untergeordnete Anteile, bis etwa 15 Gew.-% an zweckmäßig ausgewählten Comonomeren wie z.B. Methylacrylat enthalten können. Die Praepolymerisate haben üblicherweise eine Molmasse im Bereich 2 x 10⁴ bis 4 x 10⁵ Dalton [Bestimmung durch Size Exclusion Chromatography (SEC)].

In Bezug auf die Polymervorstufe PV schließt sich die vorliegende Erfindung an die Lehre des Standes der Technik (z.B. DE-PS 24 49 656, EP-PS 0 214 551 oder EP-PS 0 218 866) an, wobei die flüssigen Polymervorstufen eine Viskosität von weniger als 5 Pa·s, vorzugsweise von weniger als 0,5 Pa·s bei der zur Formgebung vorgesehenen Temperatur aufweisen.
Als Füllstoffe FS eignen sich die einschlägig für Gießharze verwendeten feinteiligen anorganischen oder organischen Materialien. Die Partikel können farblos oder eingefärbt sein. Zweckmäßig wird eine Korngröße von 200 µm Durchmesser, vorzugsweise 60 µm nicht überschritten. Daneben können aber für spezielle Zwecke noch anders dimensionierte, beispielsweise größere Füllstoffpartikel zur Anwendung kommen, z.B. in Mengen bis ca. 10 Gew.-% bezogen auf die Suspension SP. Bei Anwendung von Cristobalit als Filler sollen vorzugsweise mindestens 95 % der Teilchen < 10 µm groß sein. Teilchen mit einer Größe von ≦ 0,1 µm sollten nach Möglichkeit nicht mehr als 10 % der gesamten Teilchenzahl ausmachen. Die Teilchengröße wird gemäß den üblichen Verfahren bestimmt (vgl. B. Scarlett in "Filtration & Separation", pg. 215, 1965). Zur Teilchengrößenbestimmung werden die jeweils größten Abmessungen der Partikel herangezogen. Bevorzugt werden kornförmige Partikel. Gelegentlich kann es vorteilhaft sein, die Partikel durch Erhitzen, etwa auf 150 Grad C, von adsorptiv gebundener Feuchtigkeit zu befreien. Die Füllstoffe FS können Naturprodukte oder synthetisch hergestellt sein. Die mechanischen Eigenschaften wie Härte, elastischer Schermodul, bemessen sich nach dem vorgesehenen Anwendungszweck der Gießharze. Dabei kann die Einstellung eines elastischen Schermoduls von wenigstens 5 GNm⁻² vorteilhaft sein. Geignet sind z.B. Mineralien wie Aluminiumoxide, Aluminiumhydroxide bzw. -oxidhydrate und Derivate, z.B. Alkali- und Erdalkalidoppeloxide und Erdalkalihydroxide, Tone, Siliciumdioxid in seinen verschiedenen Modifikationen, Silikate, Aluminosilikate, Carbonate, Phosphate, Sulfate, Sulfide, Oxide, Kohle, Metalle und Metallegierungen vorzugsweise in Plättchen- bzw. Flitterform.
Ferner sind synthetische Materialien wie Glasmehl, Keramik, Porzellan, Schlacke, feinverteiltes synthetisches SiO₂ geeignet. Genannt seien Kieselsäuremodifikationen wie Quarz (Quarzmehl) Tridymit und Cristobalit, sowie Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil an der (füllstoffhaltigen) Suspension SP beträgt vorzugsweise mindestens 40 Gew.-%. Im allgemeinen wird ein Anteil von 80 Gew.-% nicht überschritten. Als Richtwert sei ein Füllstoffgehalt der Suspension SP von > 50 und bis 80 Gew.-% angegeben. Die Herstellung der Füllstoffe in den zweckmäßigen Korngrößen kann nach den bekannten Verfahren erfolgen, z.B. durch Brechen und Mahlen. Besonders bevorzugt ist Cristobalit neben Aluminiumhydroxid. Bevorzugt ist der anorganische Füllstoff so beschaffen, daß das ausgehärtete Gießharz einen elastischen Schermodul von wenigstens 5 GNm⁻², bevorzugt von wenigstens 10 GNm⁻² aufweist, wobei bei der Einstellung der mechanischen Eigenschaften die vorgesehene Anwendung der Gießharze im Auge zu behalten ist.

Bei einer bevorzugten Ausführungsart liegt die durchschnittliche Teilchengröße im Bereich 60 - 0,5 µm, vorzugsweise liegt die Härte (nach Mohs: vgl. Römpp's Chemie-Lexikon, 9. Auflage, S. 1700, Georg Thieme Verlag 1990) der Füllstoffe FS im Falle des Christobalits bei ≧ 6, im Falle des Aluminiumhydroxids bei 2,5 - 3,5. Die Silanisierungsmittel SI-M dienen in an sich bekannter Weise als Haftvermittler zwischen Füllstoff und organischer Phase. Es können somit die aus dem Stand der Technik bekannten Organosilicium-Verbindungen eingesetzt werden [vgl. D. Skudelny Kunststoffe 77, 1153 - 1156 (1987); Kunststoffe 68 (1978); Firmenschrift Dynasilan ®, Haftvermittler der Dynamit Nobel Chemie].
In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein C-Atom mit dem zentralen Siliciumatom verknüpft. Die verbleibenden Liganden am Silicium sind in der Regel Alkoxyreste mit 1 bis 6 Kohlenstoffatomen (wobei sich noch Etherbrücken im Alkylrest befinden können). Genannt seien z.B. die Vinyltrialkoxysilane. Die CC-Doppelbindung kann auch über ein oder mehrere Kohlenstoffatome mit dem Si-Atom verbunden sein, z.B. in Form der Allyltrialkoxysilane oder der γ-Methacryloyloxypropyltrialkoxysilane. Auch Dialkoxysilane können verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Es können auch verschiedene Typen von Organosiliciumverbindungen in der Organosilicium-Komponente vorhanden sein. Genannt seien z.B. das Vinyltrimethoxysilan, Vinyltriethoxysilan, Vinyltris(methoxyethoxy)silan, Divinyldimethoxysilan, Vinylmethyldimethoxysilan, Vinyltrichlorsilan, γ-Methacryloyloxypropyltrimethoxysilan oder γ-Methacryloyloxypropyltris(methoxyethoxy)-silan. Vorteilhafterweise werden die Organosiliciumverbindungen zusammen mit Katalysatoren vom Amintyp, insbesondere vom Typ der Alkylamine, mit 3 bis 6 Kohlenstoffatomen, speziell mit n-Butylamin angewendet. Als Richtwert für die Anwendung des Amin-Katalysators kann 0,05 bis 10 Gew.-%, vorzugsweise 1 bis 5 Gew.-% der Organosiliciumkomponente angenommen werden.
Im allgemeinen beträgt das Gewichtsverhältnis anorganischer Füllstoffe zu Organosiliciumverbindung 500 : 1 bis 20 : 1, vorzugsweise 50 ± 25 : 1. Von entscheidender Bedeutung für das erfindungsgemäße Verfahren ist, daß man der gebildeten, zur Polymerisation vorbereiteten Suspension SP das feste, teilchenförmige Polymerisat PP zusetzt.
Das teilchenförmige Polymerisat PP ist vorteilhafterweise ebenfalls ein Acrylharz, insbesondere PMMA bzw. ein Copolymerisat des MMA, beispielsweise mit den für die Polymervorstufe PV (s. oben) vorgeschlagenen Monomeren bzw. anderen geeigneten vinylischen Monomeren, gewöhnlich in Anteilen ≦ 20 Gew.-% bezogen auf die Polymerisate PP, insbesondere in Mengen von 0,2 - 15 Gew.-% (vgl. Ullmanns Enzyklopädie der Technischen Chemie, 3. Aufl., Bd. 14, Seiten 108 bis 110, Urban & Schwarzenberg, 1963), wie beispielsweise Vinylester und -ether, sowie Vinylverbindungen, vinylische Carbonverbindungen, Vinylaromaten, heterocyclische Vinylverbindungen u.a. Die Polymeren, welche die Teilchen PP bilden, haben im allgemeinen im unvernetzten Zustand ein Molekulargewicht im Bereich 10 000 bis 2 000 000 Dalton.
Gegebenenfalls können die Polymeren auch vernetzende Monomere, wie für die Polymervorstufe PV berichtet enthalten, d.h. die Perlen können vernetzt sein. Die Polymerisatpartikel PP besitzen in der Regel einen Durchmesser im Bereich 5 bis 1 000 µm. Ganz besonders bevorzugt sind die Polymerisate PP in Perlform, insbesondere im mittleren Teilchengrößenbereich 0,02 bis 0,3mm, speziell im Bereich 0,03 - 0,15 mm. Die Herstellung von Polymerperlen eines geeigneten Typs ist beispielsweise in der DE-A 31 30 093, der DE-A 21 35 828 bzw. der DE-A 28 15 506 beschrieben. Die Perlen PP können ihrerseits mit Füllstoffen und/oder Farbmitteln dotiert sein, wobei die Dotierung sich in der Regel nach Qualität und Quantität an die für die Suspension SP beschriebene anlehnt. Die Perlpolymerisation beruht bekanntlich auf der Umsetzung wenig wasserlöslicher (bzw. aussalzbarer) Monomerer im Wasser bzw. wäßriger Salzlösung. Außer Beschleunigern und zweckmäßigen Polymerisationshilfsmitteln werden noch Suspensionsstabilisatoren eingesetzt, beispielsweise wasserlösliche Schutzkolloide. Die Größe der Perlen wird bekanntlich im wesentlichen von den technischen Verfahrensbedingungen kontrolliert, z.B. von der Rührgeschwindigkeit, sowie Art und Menge der Suspensionsstabilisatoren. Im allgemeinen kommen monomerenlösliche, wasserunlösliche Radikalinitiatoren zur Anwendung, beispielsweise Dibenzoylperoxid und Lauroylperoxid neben Azoinitiatoren. Gegen Ende des Polymerisationsprozesses können gegebenenfalls noch Hochzerfaller zugesetzt werden (vgl. Brandrup-Immergut, Polymer Handbook, 3rd. Ed., Kapitel III, S. 1 - 65 J. Wiley 1989) In der Regel beträgt der Anteil 0,1 bis 1 Gew.-%, vorzugsweise um 0,5 Gew.-% bezogen auf die Monomeren.
Als Regler finden - wie auch bei der Substanzpolymerisation ausgehend von der Polymervorstufe PV - die üblichen Schwefelregler Anwendung. Insbesondere haben sich aliphatische Mercaptane und/oder Schwefelether bewährt. Genannt seien z.B. Laurylmercaptan, Bis-(2-ethylhexyl)sulfid, Bis(2-mercaptoethyl)sulfid u.ä. Der Anteil an Reglern beträgt im allgemeinen 0,01 bis 1,0 Gew.-%, vorzugsweise 0,05 bis 0,4 Gew.-% bezogen auf die Monomeren. Das Molgewicht (M_{w}) liegt bei den erfindungsgemäß zu verwendenden Perlen im allgemeinen zwischen 10⁴ und 2 x 10⁶, vorzugsweise zwischen 10⁵ und 10⁶ (Bestimmung durch Gelpermeationschromatographie, vgl. H.F. Mark et al., Encyclopedia of Polymer Science & Technology, Vol. 10, pg. 1 - 19, J. Wiley 1987). Auch ungeregelte oder schwach vernetzte Perlen können ggfls. eingesetzt werden.
Als Suspensionsstabilisatoren können makromolekulare, wasserlösliche Verbindungen, wie z.B. Polyvinylalkohol oder Polyacrylsäure in einer Menge von 0,01 bis 1 Gew.-%, bezogen auf die Monomeren oder anorganische, pulverförmige Zusätze verwendet werden, die als solche zugesetzt oder durch Fällung im Medium erzeugt werden können. Genannt seien z.B. Erdalkalisalze, wie Carbonate, -sulfate, - silikate usw. (vgl. C.E. Schildknecht Polymerization Processes, J. Wiley & Sons 1977, S. 119 ff). Die Perlpolymerisation kann bei erhöhter Temperatur durchgeführt werden, beispielsweise zwischen 50 und 100 Grad C, wobei als Ausgangswert etwa 75 Grad C gelten kann. Die Temperaturführung hat auch hier der entstehenden Polymerisationswärme Rechnung zu tragen. Für den Abschluß des Polymerisationsvorgangs ist das Abklingen der exothermen Reaktion, d.h. das Fallen der Temperatur nach Erreichen eines Temperaturmaximums ein Indikator. Zweckmäßigerweise wird noch über einen gewissen Zeitraum, etwa im Bereich des erreichten Temperaturmaximums nacherhitzt.
Anstelle von Polymerisat-Perlen können auch anders erzeugte Polymer-Partikel im Teilchengrößenbereich 5 bis 1000 um zur Anwendung kommen.
Die Teilchengröße wird nach den üblichen Verfahren bestimmt, wobei zur Bestimmung die jeweils größten Abmessungen der Teilchen herangezogen werden (vgl. B. Scarlett, Filtration & Suspension, S. 215, 1965). So kann z.B. aus festem Polymerisat, z.B. aus Platten durch Zerkleinerung insbesondere Mahlung bis zum erwünschten Feinheitsgrad ein teilchenförmiges Polymermaterial PP gewonnen werden, das den Anforderungen entspricht (vgl. H. Rumpf, Kunststoffe 44, 43,93 (1954); H. Balzer, Polymere Werkstoffe Bd. II, Technologie 1, 105 - 111, Georg Thieme-Verlag 1984). Bewährt hat sich beispielsweise die Mahlung mit einer Schlagkreuzmühle. In an sich üblicher Weise können die Kornfraktionen abgetrennt werden, beispielsweise durch Siebung (vgl. Kirk-Othmer, Encyclopedia of Chemical Technology 3rd. Ed. Vol. 21, pg. 114, J. Wiley 1983). Die Einarbeitung und Verteilung der teilchenförmigen Polymerisate PP in der Suspension SP geschieht zweckmäßig durch Rühren, beispielsweise mittels eines Rühraggregats im allgemeinen im Bereich von 300 - 1000 Upm.

Außer den genannten Komponenten können der Suspension SP noch an sich übliche Hilfsstoffe wie Stabilisatoren, UV-Schutzmittel, Trennmittel, Gleitmittel u.ä. und insbesondere Farmittel wie einschlägig verwendete Farbstoffe und Pigmente in Konzentrationen bis etwa 10 Vol.-% in den dafür üblichen Mengen zugesetzt werden (vgl. Ullmann's Encyclopedia of Industrial Chemistry 5th. Ed. Vol. 20A, pg. 459 - 507 VCH 1992). Besonders genannt seien als Farbmittel Gelb- bzw. Rotpigmente, z.B. solche auf Eisenoxidbasis, Weißpigmente wie z.B. Titandioxid, Zinksulfid, Schwarzpigmente wie z.B. Schwarzruße, als Blau- bzw. Grünpigmente solche auf Ultramarin- bzw. Cobalt-Basis. (Vgl. M. & O. Lückert, Pigment- und Füllstofftabellen, Laatzen 1980; H. Balzer, Polymere Werkstoffe Bd. II, S. 37 - 353, Georg Thieme-Verlag 1984). Außer Farbstoffen und Pigmenten eignen sich noch andere, an sich bekannte Zusätze, z.B. Metalle und - derivate in verschiedenen Formen, insbesondere in Plättchen- bzw. Flockenform oder als Fasern, Schnitzel, Späne oder Stäube, z.B. aus Aluminium, Kupfer, Bronze, Silber, Gold, Messing, Chrom, Nickel, Eisen bzw. Stahl, Zinn, Titan, Wolfram, Zink, daneben nicht-metallische Schnitzel oder Flocken z.B. aus Titannitrid, Nickelsulfid, Magnesiumsulfid. Weiter natürliche oder synthetisch gewonnene Flocken, Faserabschnitte u.ä. aus Nylon bzw. Polyamid, Baumwolle, Flachs, Polyester, Glas, Haare, Wolle, Hanf, Papiermasse, Polyacrylnitril, Polyethylen, Polypropylen, Proteine verschiedener Typen, Steinwolle, Holzfasern.
In einer bevorzugten Ausführungsart erfolgt der Zusatz der Farbmittel als Bestandteil von - gegebenenfalls gefüllten-Polymerpartikeln der oben geschilderten Zusammensetzung. Vorteilhafterweise liegen dabei die durchschnittlichen Teilchengrößen im Bereich 0,01 - 2 mm. Bei zweckmäßiger Verwendung von Pigmenten, z.B. Rot-, Gelb- und/oder Schwarzpigmenten u. gglfs. Weißpigmenten und/oder von metallischen Pigmenten läßt sich z.B. ein Steindekor der Formkörper (Typ: Granit oder Marmor) erzielen.

### Durchführung des Verfahrens

Zweckmäßigerweise geht man bei dem erfindungsgemäßen Verfahren von der an sich üblichen Polymervorstufe PV aus, welche Methylmethacrylat und gegebenenfalls die weiteren Monomeren sowie vorzugsweise das Praepolymerisat PM enthält. Weiter enthält die so gebildete, flüssige Phase zweckmäßig die Silanisierungsmittel SI-M.
In diese flüssige organische Phase wird nun unter mechanischem Rühren, beispielsweise mittels eines Dissolvers der anorganische Füllstoff FS unter Bildung einer Suspension eingetragen. Als Richtwert für diesen Vorgang seien etwa 10 Minuten genannt. Im allgemeinen erfolgt die Zugabe der Füllstoffe FS derart, daß die Viskosität der organischen Phase nicht über einen Wert von etwa 10 Pa s ansteigt.
Alternativ zur Silanisierung in der organischen Phase kann die Suspension auch mit bereits silanisiertem Füllstoff FS erzeugt werden. Anschließend löst man die Polymerisationshilfsmittel, wie die an sich bekannten Polymerisationsinitiatoren in Mengen von gewöhnlich 0,1 bis 5 Gew.-% bezogen auf die Monomeren M.
Als Polymerisationsinitiatoren werden Radikalbildner eingesetzt, deren Zerfall in Radikale thermisch induziert werden kann. Grundsätzlich sind alle diejenigen geeignet, die bereits bei tiefen Temperaturen einen hohen Radikalstrom liefern (vgl. J. Brandrup, E.H. Immergut, "Polymer Handbook" 3rd. Ed., Kapitel III, Seiten 1 bis 65, J. Wiley, 1989). Genannt seien z.B. Initiatoren, die bei Temperaturen von 40 - 100 Grad C eine Halbwertszeit von 1 Stunde besitzen, wie z.B. tert.-Butylperpivalat und Bis-(4-tert.-butylcyclohexyl)peroxydicarbonat.
Zweckmäßigerweise erfolgt der Zusatz der Initiatoren erst kurz vor dem Verfüllen der Gießharz-Suspensionen gefolgt von dem Zusatz der teilchenförmigen Polymerisate PP. Die Zugabe der Polymerisate PP zu der Feststoffsuspension erfolgt dann ebenfalls kurz vor dem Verfüllen in die formgebenden Kammern, tunlichst noch bevor das Anquellen der Polymerisate PP in nennenswertem Maße einsetzt. Das Eintragen der teilchenförmigen Polymerisate PP in die Suspension kann vorteilhafterweise mittels eines Mischextruders mit Vakuumentgasung bzw. mit einem Doppelschneckenextruder durchgeführt werden. Vorteilhafterweise wird die Suspension vor dem Verfüllen evakuiert.
Durch das Anquellen der Polymerisate PP in der Polymerisationskammer wird die Viskosität bzw. Strukturviskosität soweit angehoben, daß Füllstoff-Sedimentation nicht mehr bzw. nur in unbedenklichem Maße stattfinden kann.

Die Zeit bis zum Anquellen bzw. bis zur Viskositätserhöhung sowie die Größe der Viskositätserhöhung lassen sich steuern über das Molekulargewicht, die Teilchengröße und die Menge des Polymerisats PP.
Das schnelle Gelieren der Suspension erlaubt es, daß die gefüllten Polymerisationskammern noch längere Zeit, als Anhalt seien etwa 1/2 - 1 Stunde genannt, stehenbleiben können, ohne daß Sedimentation eintritt. Dadurch wird es möglich, größere Einheiten, z.B. ganze Wagen gemeinsam der Polymerisation zu unterwerfen.

Die eigentliche Härtung (= Polymerisation) erfolgt vorzugsweise unter Zufuhr thermischer Energie, beispielsweise im Wasserbad durch Erhitzen auf 35 - 80 Grad C, beispielsweise während 20 bis 300 Minuten, wobei die Härtung sowohl mit als ohne Anwendung von Druck erfolgen kann. Die gebildeten Formkörper, beispielsweise Polymerplatten werden dann in an sich bekannter Weise entformt. Die Restmonomerengehalte der gehärteten Polymerisate liegen allgemein unter 1 Gew.-%, insbesondere unter 0,5 Gew.-% bezogen auf die Gesamtheit der Monomeren.

### Vorteilhafte Wirkungen

Das erfindungsgemäße Verfahren gestattet überraschenderweise die Herstellung auch großer, relativ dicker gefüllter PMMA-Platten, etwa in den Abmessungen 4 000 x 2 500 x 20 mm unter Verwendung der Anlagen des Standes der Technik.

Da die Polymerisation unter definierten Bedingungen in reproduzierbarer Weise durchgeführt werden kann, lassen sich die Folgen einer unkontrollierten Polymerisation wie z.B. Spannungen im Produkt vermeiden.
Infolge des Ausbleibens der Füllstoffsedimentation treten auch keine durchgebogenen, inhomogenen Platten auf. Das Verfahren bietet - wie bereits erwähnt - mehrfache Steuerungsmöglichkeiten, die gestatten, die Größe und das zeitliche Auftreten der Viskositätserhöhung zu beeinflussen.
Besonders attraktiv erscheint auch die Anwendbarkeit der Standardausrüstung zur Herstellung gegossener PMMA-Platten.
Darüber hinaus eignet sich das Verfahren auch zur Herstellung nicht-planer Objekte wie beispielsweise von Spülen, Waschbecken, Bade- und Duschwannen und sonstigen Sanitärartikeln. Durch geeignete Einfärbung kann bei sämtlichen Anwendungsformen ein Steindekor erreicht werden.
Hervorgehoben sei auch die Möglichkeit der kontinuierlichen Durchführung des erfindungsgemäßen Verfahrens.

### BEISPIELE

### Beispiel 1

In einen Sirup bestehend aus 9,569 kg Methylmethacrylat, 950 g eines Polymethylmethacrylats mit Molmasse M_{w} ca. 3 x 10⁵ g/mol (PLEXIGUM ® M 920 der Fa. Röhm GmbH), 1,14 g 2,4-Dimethyl-6-tert.-butylphenol, 114 g Glykoldimethacrylat, 190 g Stearinsäure und 5,7 g 1-Isopropyl-4-methyl-1,4-cyclohexadien werden unter Rühren an einem Dissolver 25,270 kg Aluminiumhydroxid bestehend aus einem Gemisch mit mittlerer Teilchengröße von 45 µ und von 7 - 8 µ (Produkte ALCOA C33 und ALCOA C333) eingebracht und dispergiert. Anschließend werden in der Suspension 38 g Bis-(4-tert.-Butylcyclohexyl)peroxydicarbonat, 38 g tert.-Butylperpivalat und 19 g tert.-Butylperoctoat gelöst.
Nach dem Einrühren von 1900 g eines teilchenförmigen Polymethylmethacrylats mit M_{w} = ca. 5 x 10⁵ g/mol; durchschnittl. Teilchengröße ca. 50 µ (Produkt PLEXIDON ® M727 der Röhm GmbH) wird der Ansatz evakuiert und in eine auf 12 mm distanzierte Silikatglaskammer gefüllt. Die verschlossene Kammer wird in einem Wasserbad bei 40 Grad C 160 Minuten lang erwärmt. Die Endpolymerisation erfolgt in einem Trockenschrank bei 110 Grad C über einen Zeitraum von 60 Minuten. Nach dem Abkühlen der Kammer kann der Plattengießling entnommen werden. Die Platte erweist sich als blasenfrei und nicht durchgebogen.

## Patentansprüche

1. Verfahren zur Herstellung gefüllter Formteile auf Polymethylmethacrylatbasis mittels Substanzpolymerisation in einer geeigneten Polymerisationskammer,
dadurch gekennzeichnet,
daß man in an sich bekannter Weise eine flüssige, die Monomeren enthaltende Polymervorstufe PV herstellt, in die unter hochtourigem Rühren unter Bildung einer Suspension SP der partikelförmige Füllstoff FS in Anteilen von 30 bis 80 Gew.-% bezogen auf die gebildete Suspension SP eingetragen wird und wobei man der Suspension SP kurz vor dem Verfüllen in die Polymerisationskammer einen Radikal-Initiator und ein festes, teilchenförmiges Polymerisat PP in Anteilen von 1 bis 20 Gew.-% bezogen auf die Suspension SP in gleichmäßiger Verteilung zusetzt, anschließend in die Polymerisationskammer verfüllt, dann die Polymerisation durchführt und Entformung vornimmt.

2. Verfahren gemäß Anspruch 1, dadurch gekennzeichnet, daß das feste, teilchenförmige Polymerisat PP ein Acrylharz ist.

3. Verfahren gemäß den Ansprüchen 1 und 2, dadurch gekennzeichnet, daß das feste, teilchenförmige Polymerisat PP Füllstoffe und/oder Farbmittel enthält.

4. Verfahren gemäß den Ansprüchen 1 bis 3, dadurch gekennzeichnet, daß das feste, teilchenförmige Polymerisat PP einen Durchmesser im Bereich 5 - 1 000 µm besitzt.

5. Verfahren gemäß den Ansprüchen 1 bis 4, dadurch gekennzeichnet, daß das feste, teilchenförmige Polymerisat PP ein Perlpolymerisat darstellt.

6. Verfahren gemäß Anspruch 1, dadurch gekennzeichnet, daß der partikelförmige Füllstoff FS eine durchschnittliche Teilchengröße im Bereich 60 - 0,5 µm besitzt.

7. Verfahren gemäß den Ansprüchen 1 und 6, dadurch gekennzeichnet, daß der partikelförmige Füllstoff FS anorganisch ist.

8. Verfahren gemäß Anspruch 7, dadurch gekennzeichnet, daß der anorganische Füllstoff FS ein Aluminiumhydroxid ist.

9. Verfahren gemäß den Ansprüchen 1 - 8, dadurch gekennzeichnet, daß den Formteilen Farbmittel zugesetzt werden.

10. Verfahren gemäß Anspruch 9, dadurch gekennzeichnet, daß die Farbmittel in Form von farbigen, gegebenenfalls ebenfalls gefüllten Polymerpartikeln im Teilchengrößenbereich 0,01 - 2 mm zugesetzt werden.

11. Verfahren gemäß den Ansprüchen 1 - 8, dadurch gekennzeichnet, daß die Farbmittel in Form von plättchenförmigen Pigmenten zugesetzt werden.

12. Verfahren gemäß den Ansprüchen 1 - 11, dadurch gekennzeichnet, daß als Formteile Platten hergestellt werden.

13. Verfahren gemäß den Ansprüchen 1 - 11, dadurch gekennzeichnet, daß als Formteile nicht-plane Objekte ausgewählt aus der Gruppe der Spülen, Waschbecken, Bade- und Duschwannen und sonstigen Sanitärartikel hergestellt werden.
